# EUROPÄISCHE PATENTSCHRIFT

(11) **EP 2 783 083 B1**
(45) Veröffentlichungstag und Bekanntmachung des Hinweises auf die Patenterteilung: **18.01.2017**
(21) Anmeldenummer: 12790467.0
(22) Anmeldetag: 08.11.2012
(51) Int. Cl.: F01N 3/20, F16K 49/00

(54) **VORRICHTUNG ZUR KÜHLUNG EINES DOSIERVENTILS**
DEVICE FOR COOLING A DOSING VALVE
DISPOSITIF POUR LE REFRODISSEMENT D'UN INJECTEUR DE DOSAGE

(30) Priorität: 22.11.2011 DE 102011086795
(43) Veröffentlichungstag der Anmeldung: 01.10.2014
(73) Patentinhaber: Robert Bosch GmbH, 70442 Stuttgart (DE)
(72) Erfinder: KIONTKE, Martin, 71254 Ditzingen (DE); WINKLER, Jochen, 73730 Esslingen (DE)
(86) Internationale Anmeldenummer: PCT/EP2012/072133
(87) Internationale Veröffentlichungsnummer: WO 2013/075950

(56) Entgegenhaltungen:
- EP-A1- 2 503 122
- WO-A1-2013/068288
- DE-A1- 4 436 397
- DE-A1-102009 047 375
- JP-A- 2007 321 647

## Beschreibung

### Stand der Technik

Die Erfindung betrifft eine Vorrichtung zur Kühlung eines Dosiermodules, insbesondere zum Eindosieren eines Reduktionsmittels, wie beispielsweise Harnstoff oder eine Harnstoff-Wasser-Lösung, in den Abgastrakt einer Verbrennungskraftmaschine.

DE 44 36 397 A1 bezieht sich auf eine Einrichtung zum Nachbehandeln von Abgasen. Es wird eine Einrichtung zur Nachbehandlung von Abgasen einer selbstzündenden Verbrennungskraftmaschine offenbart, bei der zur Verbesserung der Arbeitsweise eines reduzierenden Katalysators ein Reduktionsmittel in das dem Katalysator zugeführte Abgas eingegeben wird. Die Eingabe des Reduktionsmittels erfolgt dabei über ein elektrisch gesteuertes Dosierventil, das in einem gemeinsamen Gehäuse mit einem Steuerventil angeordnet ist. Das Steuerventil dient der gesteuerten Einbringung zugeführter Druckluft, in der eine über das Dosierventil vorgelagerte Menge von Reduktionsmittel aufbereitet und intermittierend in das Abgas eingebracht wird. Diese intermittierende Einbringung dient insbesondere der Vermeidung von Harnstoffablagerungen sowie dem Vermeiden von Verklebungen an Dosierventil und Steuerventil neben der optimalen Aufbereitung des eingebrachten Reduktionsmittels.

US 2006 0108443 A1 hat eine lanzenförmige Sprühvorrichtung für eine Reduktionsmittel zur Senkung der NOₓ-Emissionen zum Gegenstand. Die Sprühvorrichtung umfasst eine Leitung für ein Reduktionsmittel, insbesondere eine Harnstoff-Wasser-Lösung, die von einer Zerstäuberleitung umgeben ist. Die Zerstäuberleitung ist von einem röhrenförmigen Kühlungsgehäuse umgeben, welches eine mantelförmige Flüssigkühlkammer bildet. Die mantelförmig ausgebildete Flüssigkühlkammer erstreckt sich über einen erheblichen Längenabschnitt der Zerstäuberleitung. Der Flüssigkühlkammer wird Flüssigkeit über einen Zulauf zugeführt und über einen Ablauf wieder abgeführt. Der Zulauf und der Ablauf liegen an einem dem Abgasrohr abgewandten Ende der Sprühvorrichtung. Der Zulauf weist ein Verlängerungsrohr auf, so dass die Kühlflüssigkeit an einer Stelle zwischen dem Zulauf und dem Einspritzende in die Flüssigkühlkammer eintritt.

DE 10 2009 047 375 A1 offenbart ein Dosiermodul, bei dem ein Dosierventil zur Harnstoffeindosierung in den Abgastrakt einer Verbrennungskraftmaschine aufgenommen ist. Um mit der Ventilspitze des Dosierventiles so nah wie möglich an den Abgasstrom zu gelangen, wird in dem Dosiermodul die Ventilaufnahme für das Dosierventil aktiv gekühlt. Dabei ist dem Dosiermodul eine Kühleinrichtung zugeordnet, welche eine Mantelfläche des Dosiermoduls umschließt und die von einer Kühlflüssigkeit, einem Kühlfluid durchströmt ist. Dabei handelt es sich beispielsweise um aus dem Kühlfluidkreislauf eines Fahrzeug entnommenes Kühlfluid. Trotz der relativ großen Nähe des Dosierventiles nahe am Abgasstrom, steigt die Temperatur in der Nähe der Austrittsöffnung, d.h. der Einspritzöffnung für das Reduktionsmittel in den Abgastrakt nicht über 120°C an.

DE 10 2005 061 145 A1 offenbart eine Abgasnachbehandlungsvorrichtung zum Nachbehandeln von Abgas in einem Abgassystem einer Verbrennungskraftmaschine. Die Abgasnachbehandlungsvorrichtung umfasst eine Dosierventil, das an einem Abgasrohr angeflanscht ist. Der Flansch steht unter einem Winkel seitlich von der Mantelfläche des Abgasrohrs ab, so dass die hitzeempfindliche Ventilspitze des Dosiermodules von der Abgasströmung etwas beabstandet ist. Zur Wärmeabfuhr ist das Dosierventil gemäß dieser Lösung bereichsweise von Kühlrippen umgeben, welche aus einem Material hergestellt sind, welches eine hohe Wärmeleitfähigkeit aufweist. Bei der hier dargestellten passiven Kühlung durch Kühlrippen ist eine vorteilhaftere nähere Positionierung des Dosierventils in Bezug auf den Abgaskanal aus Platzgründen nicht möglich.

JP 2007-321647 offenbart ein Einspritzventil für eine Abgassnachbehandlungsanordnung mit einer Kühleinrichtung.

WO 2013/068288 offenbart ein Dosiermodul zur Einspritzung eines Reduktionsmittels in einen Abgasstrang, welches einen Kühlkörper und einen Zusatzkühlkörper aufweist.

WO 2013/068288 ist nachveröffentlicht.

### Darstellung der Erfindung

Erfindungsgemäß wird vorgeschlagen, ein Dosiermodul, welches ein Dosierventil umfasst, mit einer Kühleinrichtung auszustatten, wobei die Kühleinrichtung selbst von einem Kühlfluid durchströmt ist und die Kühleinrichtung zumindest zwei miteinander in Verbindung stehende Kammern aufweist. Als Kühlfluid kommt entweder das im Kühlkreislauf einer Verbrennungskraftmaschine zirkulierende Kühlfluid in Betracht oder ein von diesem Kühlfluid separiertes, gesondertes Kühlfluid, welches in einem gesonderten Kühlkreis zirkulieren kann. Die besagten zumindest zwei Kammern umfassen eine erste Kammer, die einem Endbereich des Dosierventils zugeordnet ist und eine zweite Kammer, die einem Mittelbereich des Dosierventils zugeordnet ist. Das Kühlfluid durchströmt die beiden Kammern bevorzugt nacheinander. Die erste Kammer befindet sich in dem Bereich des Dosierventiles, welches im Abgastrakt der Verbrennungskraftmaschine eingebaut ist, und an dem die höchsten Temperaturen aufgrund der höchsten Nähe zum Abgastrakt auftreten. Die zweite Kammer befindet sich im Mittelbereich des Dosierventiles, und kühlt beispielsweise unter Ausschluss eines elektrischen Kurzschlusses eine elektrische Kontaktstelle, an dem eine Magnetspule des elektrisch betätigten Dosierventiles kontaktiert wird.

Durchströmt das Kühlfluid bei seinem Weg durch die beiden hydraulisch miteinander vorgesehenen zumindest zwei Kammern, so ist bei Durchströmen der ersten Kammer und dort auftretenden höchsten thermischen Belastungen, die Ventilspitze in optimaler Weise gekühlt, da in die erste Kammer gemäß dieser Durchströmungsreihenfolge das Kühlfluid mit seiner relativ niedrigsten Temperatur eintritt. Dadurch wird eine optimale Kühlung des Ventilspitzenbereichs des Dosierventiles erreicht. Danach gelangt das Kühlfluid in die hydraulisch mit der ersten Kammer verbundenen zweite Kammer, in welcher eine Kühlung weiterer sensibler Bereiche, insbesondere innerhalb eines elektrischen Steckerbereiches und/oder im Spulenbereich des Dosierventils erfolgt. Prinzipiell besteht auch die Möglichkeit, eine Durchlaufen der mindestens beiden besagten Kammern in umgekehrter Richtung vorzusehen. Bei einer Durchströmung der mindestens zwei Kammern der Kühlvorrichtung mit dem Kühlfluid in umgekehrter Richtung ist zu berücksichtigen, dass bei dieser Durchlaufrichtung die effektivste Kühlung im Steckerbereich und/oder im Spulenbereich des Dosierventiles erzielt wird, da dort das Kühlfluid mit seiner relativ niedrigsten Temperatur eintritt, wohingegen der thermisch besonders stark beanspruchte Spitzenbereich des Dosierventiles weniger stark gekühlt werden kann.

Im Betrieb liegt die Temperatur im Abgasrohr des Abgastraktes in einem typischen Bereich zwischen 200°C und 850°C.

Die Ventilspitze, d.h. der Bereich des Dosierventils, an welchem das Reduktionsmittel in den Abgastrakt austritt, wird aus einem schlecht wärmeleitenden Material, bevorzugt einem Stahl gefertigt, der eine hohe thermische Beständigkeit, eine hohe chemische Beständigkeit, insbesondere gegen ein Reduktionsmittel wie beispielsweise AdBlue® sowie Folgeprodukte, ferner eine hohe chemische Beständigkeit gegen Abgaskondensat aufweist. Des Weiteren zeichnet sich das Material, aus dem die Ventilspitze bevorzugt gefertigt wird, durch gute Schweißeigenschaften sowie eine gute Umformbarkeit aus.

Das aktiv mittels des Kühlfluides gekühlte Ende, d.h. die Ventilspitze des Dosierventils umfasst einen Ventispitzenbereich, an dem das Reduktionsmittel, bevorzugt zerstäubt als Harnstoffluftgemisch oder einer Harnstoff-Wasser-Lösung versetzt mit Druckluft austritt, um in das Abgasrohr des Abgastraktes der Verbrennungskraftmaschine zu gelangen. Darüber hinaus wird der erfindungsgemäß vorgeschlagenen Lösung folgend der Mittelbereich des Dosierventiles, d.h. der Bereich des Dosierventiles mit dem Kühlfluid gekühlt, in dem sich die Magnetspule zur Betätigung des Dosierventiles sowie der elektrische Steckerabgang befinden. Der Mittelbereich des Dosierventiles kann einen Bereich umfassen, welcher als ein Rohrabschnitt zur Injektion des Reduktionsmittels, insbesondere Harnstoff oder eine Harnstoff-Wasser-Lösung in den Abgaskanal ausgebildet sein kann und auch Bereiche aufweisen, die funktional an die Zuführleitung des Reduktionsmittels angeschlossen sind, etwa einen Bereich in dem auch die elektrische Kontaktierung liegt.

In vorteilhafter Weise kann der Ventilspitzenbereich des Dosierventiles von der Strömung innerhalb des Strömungsrohrs beabstandet sein, so dass der Ventilspitzenbereich der höchsten auftretenden Temperatur im Strömungsrichtung nicht in unmittelbarer Weise ausgesetzt ist. In einer bevorzugten Ausführungsvariante der erfindungsgemäß vorgeschlagenen Lösung umfasst eine der beiden Kammern, die von dem Kühlfluid durchströmt werden, einen Bereich, in dem sich ein elektrischer Steckkontakt zur elektrischen Ansteuerung der Magnetspule des Dosierventiles befindet. Durch die erfindungsgemäß vorgeschlagene Lösung wird durch Vorsehen der zweiten vom Kühlfluid durchströmten Kammer der Steckerbereich des Dosierventiles gekühlt, so dass ein Dosiermodul auch bei höheren Umgebungstemperaturen eingesetzt werden kann. Dies ist insbesondere dann interessant, wenn das Dosiermodul mit dem Dosierventil nicht im Unterbau des Fahrzeugs eingebaut wird, sondern beispielsweise im Motorraum eines Fahrzeugs angeordnet wird, in dem höhere Temperaturen auftreten können, welche jedoch durch die erfindungsgemäß vorgeschlagene Lösung nicht zu einer Beeinträchtigung der Funktionsweise sowie der Lebensdauer des Dosierventiles führen. Die elektrische Steckverbindung kann bei Temperaturen von über 160°C Schaden nehmen und es ist bei nicht vorhandener Kühlung mit elektrischen Kontaktierungsausfällen zu rechnen. Dem wird dadurch Rechnung getragen, dass aufgrund der Anordnung der zweiten Kühlkammer im Mittelbereich des Dosierventiles eine aktive Kühlung um den elektrischen Steckerbereich herum gewährleistet ist und eine zuverlässige elektrische Kontaktierung auch bei hohen Umgebungstemperaturen dauerhaft besteht.

### Vorteile der Erfindung

In vorteilhafter Weise kann die erfindungsgemäß vorgeschlagene Vorrichtung bei Umgebungstemperaturen > 160°C eingesetzt werden, da die elektrische Steckerverbindung und die Magnetspule des Dosierventiles bei derartigen Temperaturen keinen Schaden nehmen, während bei aus dem Stand der Technik bekannten Vorrichtung mit einem Ausfall des Ventiles bzw. der elektrischen Kontaktierung bei dieser Temperatur zu rechnen wäre. Die erfindungsgemäß vorgeschlagene Kühlvorrichtung ermöglicht daher einen Einsatz des Dosiermodules in Umgebungen, in welchen hohe Temperaturen vorherrschen, wie dem oben stehend bereits erwähnten Motorraum eines Fahrzeugs. In einer weiteren vorteilhaften Ausführungsform der erfindungsgemäß vorgeschlagenen Lösung umfasst die zweite Kühlkammer, die sich im Mittelbereich des Dosierventiles befindet, einen Bereich, in welchem eine Magnetspule des Dosierventiles angeordnet ist. Die Magnetspule wird im Betrieb des Dosierventiles sehr stark beansprucht und ist einer Materialermüdung besonders ausgesetzt. Die Magnetspule zur Betätigung des Dosierventiles stellt ein empfindliches Bauteil der Dosiervorrichtung dar, dessen Ausfall durch das erfindungsgemäß vorgeschlagene Vorsehen der zweiten Kühlkammer im Bereich der Magnetspule des Dosierventiles Rechnung getragen wird.

Die mindestens eine erste und eine zweite Kammer, die von dem Kühlfluid durchströmt werden, können durch eine oder mehrere Durchtrittsöffnungen hydraulisch miteinander verbunden sein. Die Durchtrittsöffnungen liegen an einander begrenzenden Decken bzw. Bodenflächen der beiden Kammern, die ihrerseits vorzugsweise mit einer stoffschlüssigen Verbindung verbunden sind. Dazu eignet sich insbesondere eine Laserverschweißung entlang der Kontaktflächen der genannten Bereiche der beiden miteinander stoffschlüssig zu fügenden Kammern bzw. deren begrenzender Bauteile. Das Ausbilden einer stoffschlüssigen Verbindung als Laserschweißung stellt eine besonders kostengünstige Umsetzung dar. Zweckmäßigerweise können die vom Kühlfluid durchströmten Kammern als Tiefziehbauteile und/oder gebogene Teile hergestellt werden. Es besteht außerdem die Möglichkeit, die erfindungsgemäß vorgeschlagene Vorrichtung vollständig zu verkleiden, da die aufgestaute Luft die empfindlichen Bauteile nicht erreichen kann.

Als weitere vorteilhafte Eigenschaften der erfindungsgemäß vorgeschlagenen Lösung sind zu nennen, dass es sich um eine Weiterentwicklung eines bestehenden Produktes handelt, so dass vorhandene Bauteile und Fertigungseinrichtung lediglich geringfügig zu modifizieren sind und im Wesentlichen weiterverwendet werden können, was einen nicht unerheblichen Fertigungskostenvorteil darstellt. Des Weiteren ist als Vorteil zu nennen, dass mit der erfindungsgemäß vorgeschlagenen Lösung die Möglichkeit besteht, Kühlfluidzuläufe axial oder zumindest annähernd axial zu gestalten. Dadurch kann in Bezug auf die radiale Baurichtung ein Bauraumvorteil erzielt werden so dass Kunden bedient werden können, bei deren Lösungen nur eingeschränkte Bauräume zur Verfügung stehen.

### Kurze Beschreibung der Zeichnungen

Anhand der Zeichnung wird die Erfindung nachstehend eingehender beschrieben.

Es zeigt:
- Figur 1: ein Dosiermodul mit einem Dosierventil mit gekennzeichnetem gekühlten und ungekühlten Bereiche,
- Figur 2: eine perspektivische Ansicht eines Dosiermodules,
- Figur 3: ein Dosiermodul mit einem zweiten, im Mittelbereich des Dosiermodules angeordneten Kühlkörper sowie einem Kühlfluideintritt,
- Figur 4: eine Darstellung von Durchtrittsöffnungen zwischen der ersten vom Kühlfluid beaufschlagten Kammer und einer oberhalb von dieser angeordneten zweiten vom Kühlfluid beaufschlagten Kammer und
- Figur 5: eine Schnittdarstellung durch ein Dosiermodul mit gekennzeichneten gekühlten Flächen sowie einem Schnitt durch die erste von Kühlfluid durchströmte Kammer sowie eine zweite von Kühlfluid durchströmte Kammer.

### Ausführungsformen der Erfindung

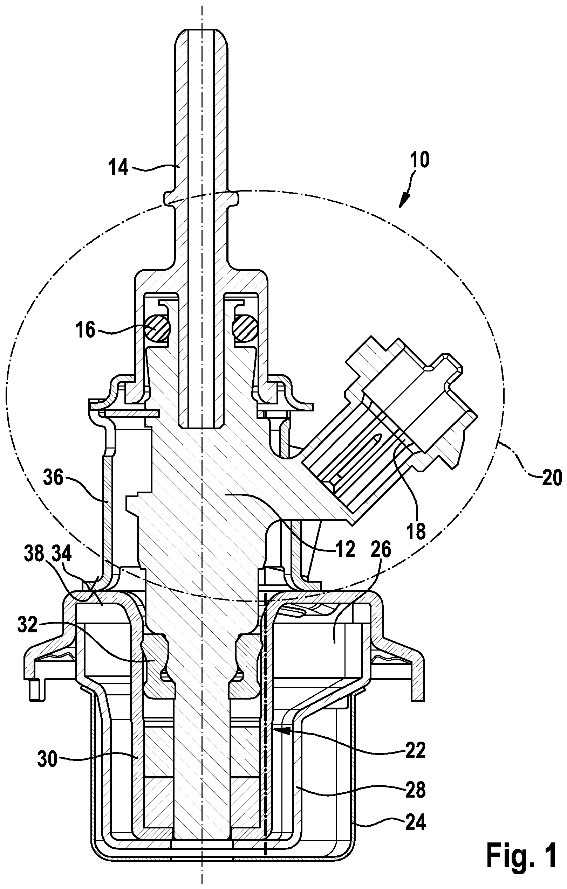

Der Darstellung gemäß Figur 1 ist ein Schnitt durch ein Dosiermodul mit einem Dosierventil zu entnehmen, welches im unteren Bereich einen von Kühlfluid gekühlten Bereich und im Mittelbereich einen ungekühlten Bereich aufweist.

Die Schnittdarstellung gemäß Figur 1 zeigt ein Dosiermodul 10, in dem ein Dosierventil 12 aufgenommen ist. Das Dosiermodul 12 wird über einen Reduktionsmittelzulauf 14, der sich in senkrechter Richtung in vertikaler Richtung von oben auf das Dosiermodul 12 erstreckt, mit einem Reduktionsmittel beaufschlagt. Bei dem Reduktionsmittel handelt es sich bevorzugt um ein Reduktionsmittel wie Harnstoff oder eine Harnstoff-Wasser-Lösung - auch bekannt unter dem Handelsnamen AdBlue®. Anstelle der in Figur 1 dargestellten, im Wesentlichen senkrecht ausgebildeten Reduktionsmittelzufuhr, kann diese auch einen um 90° abgewinkelten Verlauf aufweisen oder statt des hier dargestellten einen Reduktionsmittelzulaufes 14 können mehrere Reduktionsmittelzuläufe 14 ausgebildet sein. Das Dosierventil 12 der Dosiervorrichtung 10 ist über einen Dichtring 16 abgedichtet. Seitlich am Dosiermodul 12 befindet sich ein Steckerabgang eines elektrischen Steckkontaktes 18.

Wie aus der Darstellung gemäß Figur 1 hervorgeht, ist bei dieser Ausführungsvariante des Dosiermodules 10 lediglich der untere Bereich des Dosierventiles gekühlt, vergleiche Position 22, und der mittlere Bereich des Dosierventiles 12 der Dosiervorrichtung einen ungekühlten Bereich 20 markiert.

Figur 1 zeigt, dass die Dosiervorrichtung 10 im gekühlten Bereich 22 einen Topf 24 umfasst. Der Topf 24 umschließt ein Einsatzteil 28. Dieses wiederum ist von einem Abdeckteil 30 überdeckt, welches mit dem Einsatzteil 28 eine erste Kammer 26 definiert, die vom Kühlfluid, so zum Beispiel dem in der Verbrennungskraftmaschine in deren Kühlkreislauf zirkulierenden Kühlfluid, beaufschlagt ist. Aus der Darstellung gemäß Figur 1 geht hervor, dass der untere schlank ausgebildete Bereich des Dosierventiles 12 von einer Zentrierung bzw. einem Stützteil 32 im Abdeckteil 30 zentriert wird. Am unteren Ende des Dosierventiles 12, d.h. den Boden des Abdeckteiles 30 sowie den Boden des Einsatzteiles 28 und des Topfes 24 durchsetzend, befindet sich die Ventilspitze des Dosierventiles 12, d.h. die thermisch höchst belastete Stelle des Dosierventiles 12, an der das Reduktionsmittel, insbesondere als fein verstäubter Tröpfchennebel, sei es Harnstoff, sei es eine Harnstoff-Wasser-Lösung in den Abgasstrom im Abgastrakt der Verbrennungskraftmaschine eingespritzt wird.

Aus der Darstellung gemäß Figur 1 geht überdies hervor, dass sich im ungekühlten Bereich 20 ein zusätzlicher Kühlkörper 36 befindet. Entlang einer Kontaktfläche 38 sind der zusätzliche Kühlkörper 36, der sich im Mittelteil des Dosierventiles 12 befindet sowie der eine Deckfläche 34 aufweisende Abdeckteil 30 stoffschlüssig miteinander verbunden. Als stoffschlüssige Verbindung hat sich eine Laserverschweißung bewährt, die sehr einfach und sehr kostengünstig in der Großserienproduktion hergestellt werden kann.

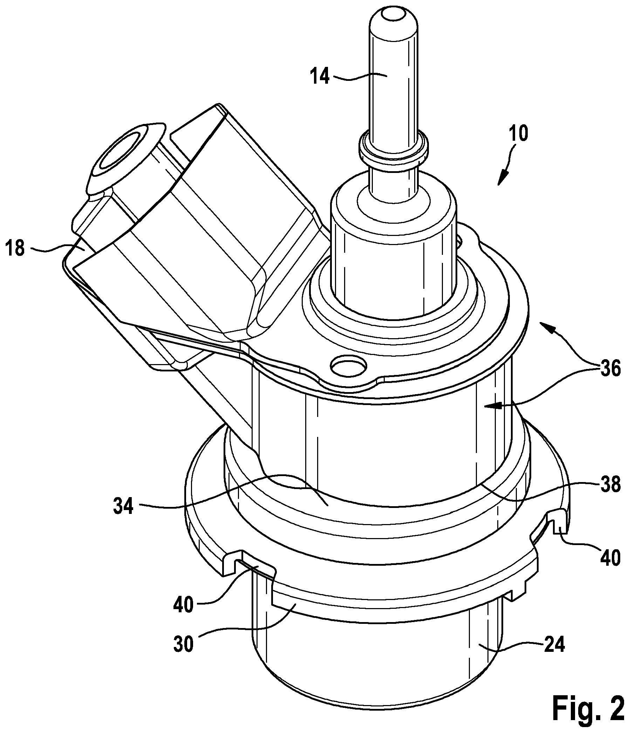

Figur 2 zeigt eine perspektivische Draufsicht auf ein Dosiermodul.

Das Dosiermodul 10 gemäß der perspektivischen Draufsicht in Figur 2 zeigt den sich im Wesentlichen in vertikale Richtung erstreckenden Reduktionsmittelzulauf 14 und einen seitlichen Steckerabgang 18, unterhalb dessen sich der zusätzliche Kühlkörper 36 befindet, der nachfolgend anhand der folgenden Figuren noch eingehender beschrieben werden wird. Entlang der Kontaktfläche 38 sind der zusätzliche Kühlkörper 36 und das Abdeckteil 30 an der Deckfläche 34, die als Planfläche ausgebildet ist, stoffschlüssig und dicht miteinander verbunden. Aus der perspektivischen Draufsicht gemäß Figur 2 ergibt sich, sich am umlaufenden Kragen des Abdeckteiles 30 Positionier-Ausnehmungen 40 befinden, welche zur Ausrichtung des erfindungsgemäß vorgeschlagenen Dosiermodules 10 bei dessen Montage im Abgastrakt einer Verbrennungskraftmaschine dienen. Die Positionier-Ausnehmungen 40 dienen in vorteilhafter Weise einer Montage des Dosiermodules 10 im Lkw-Bereich. Die Befestigung des Dosiermodules 10 an Lastkraftfahrzeugen erfolgt mittels eines Schraubflansches, wobei die Positionier-Ausnehmungen 40 den erforderlichen Platz für die Befestigungsschrauben zur Verfügung stellen.

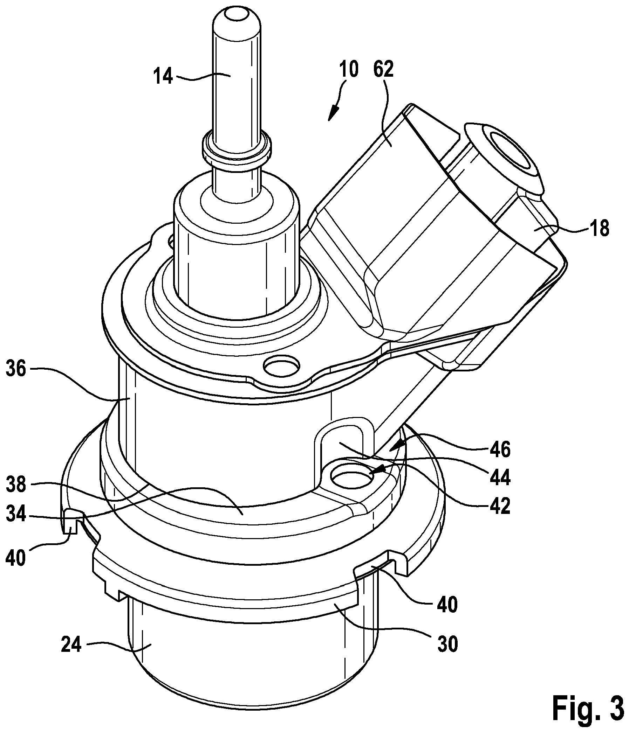

Der Darstellung gemäß Figur 3 ist zu entnehmen, dass eine Eintrittsöffnung für ein Kühlfluid, vergleiche Position 42 sich in der Deckfläche 34 des Kragens des Abdeckteiles 30 befindet. Um den Anschluss einer Kühlfluid führenden Leitung zu erleichtern, weicht die Mantelfläche des zusätzlichen Kühlkörpers 36 eine Art Einbuchtung 44 auf, um den nötigen Bauraum für einen Anschlussstutzen bzw. für einen Anschlussschlauch bereitzustellen, so dass die Anschlussmontage einfacher gehandhabt werden kann. Aus Figur 3 geht zudem hervor, dass der elektrische Steckkontakt 18 durch eine Schutzkappe 62 abgedeckt ist. Da die Deckfläche 34 des Abdeckteiles 30 als Planfläche 46 ausgebildet ist, ist auch der Kühlfluid-Eintritt 42 planverlaufend ausgebildet. Unterhalb des Kragens des Abdeckteiles 38 in dem die Positionierungs-Ausnehmungen 40 vorgesehen sind, befindet sich der Topf 24, der sowohl das Einsatzteil 28, als auch das Abdeckteil 30 umgibt.

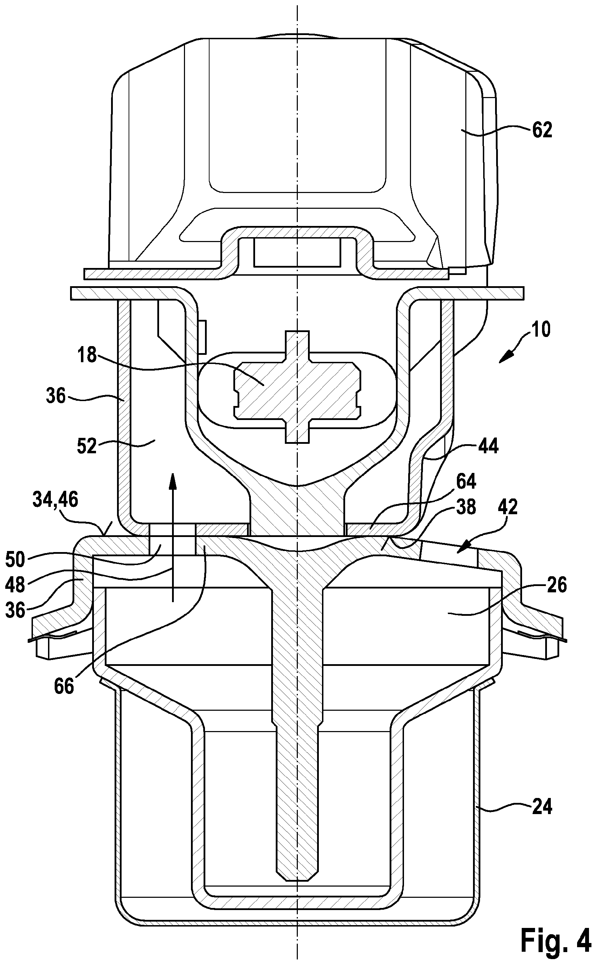

Figur 4 zeigt das Dosiermodul 10 aus einer anderen, im Vergleich zu den vorstehenden Figuren um 90° gedrehten Lage. Aus der Darstellung gemäß Figur 4 geht hervor, dass das Dosiermodul 10 den zusätzlichen Kühlkörper 36 umfasst, der über mindestens eine Öffnung zum Durchtritt des Kühlfluides mit der ersten Kammer 26, die durch das Abdeckteil 30 gebildet wird also mindestens einer Öffnung 50 in hydraulischer Verbindung steht, so dass Kühlfluid von der ersten Kammer 26, welche sich im unteren Teil der Dosiervorrichtung 10 befindet, über die mindestens eine Öffnung 50 in eine zweite Kammer 52, die im zusätzlichen Kühlkörper 36 ausgebildet ist, überströmen kann.

Wie aus der Schnittdarstellung gemäß Figur 4 hervorgeht, befindet sich der zusätzliche Kühlkörper 36 oberhalb des Abdeckteiles 30, insbesondere auf dessen Deckfläche, die als Planfläche 46 ausgebildet ist. Das Abdeckteil 30 und der zusätzliche Kühlkörper 36 sind durch eine stoffschlüssige Verbindung 38, die bevorzugt als Laserverschweißung ausgebildet ist, dichtend miteinander verbunden. Figur 4 zeigt, dass die erste Kammer 26, die vom Einsatzteil 28 und vom Abdeckteil 30 begrenzt ist und der zweiten Kammer 52, die sich im zusätzlichen Kühlkörper 36 befindet, durch mindestens eine Öffnung 50 verbunden sind. Durch diese mindestens eine Öffnung 50, die einerseits im Deckelteil 66 ausgebildet ist und sich im Bodenteil 64 des zusätzlichen Kühlkörpers 36 andererseits befindet, strömt Kühlfluid in Überströmrichtung 48 von der ersten Kammer 26 in die zweite Kammer 52. In der Planfläche 64 des Deckelteils 66 des Abdeckteiles 30 befindet sich des Weiteren die Öffnung 42 für den Kühlfuid-Eintritt. Wie vorstehend bereits erwähnt, kann es sich bei dem zunächst in die erste Kammer 26 eintretenden Kühlfluid sowohl um das im Kühlkreislauf der Verbrennungskraftmaschine zirkulierende Kühlfuid als auch um ein separat bevorratetes in einem separaten Zirkulationskreis zirkulierendes Kühlfluid handeln.

Der Vollständigkeit halber sei erwähnt, dass das Einsatzteil 28 von einem Topf 24 umgeben ist, ebenso wie der elektrische Steckkontakt 18, der von einer Schutzkappe 62, die aus Gummi oder aus einem Kunststoffmaterial gefertigt sein kann, umschlossen ist.

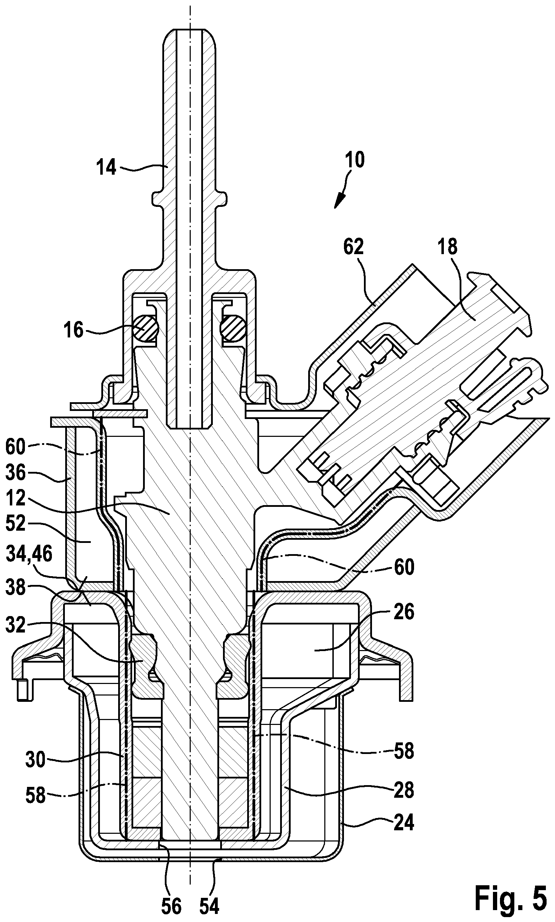

Aus der Darstellung gemäß Figur 5 geht das Dosiermodul im Längsschnitt hervor.

Das Dosierventil 12 des Dosiermodules 10 wird über den senkrecht in vertikaler Richtung von oben in den Körper des Dosierventiles 12 eintretenden Reduktionsmittelzulauf 14 mit Reduktionsmittel, sei es Harnstoff oder sei es eine Harnstoff-Wasser-Lösung - auch bekannt unter dem Namen AdBlue® - beaufschlagt. Seitlich am Dosierventil 12 befindet sich ein elektrischer Steckkontakt 18, der von der bereits erwähnten Schutzkappe 62 umschlossen ist. Der Reduktionsmittelzulauf 14 ist mit einem Dichtring 16, der sich oberhalb des Dosierventiles 12 befindet, abgedichtet. Figur 5 zeigt, dass der zusätzliche Kühlkörper 36 entlang einer Kontaktfläche 38 mit der Deckfläche 34 des Abdeckteiles 30 stoffschlüssig verbunden ist. In der in Figur 5 dargestellten Schnittebene ist die mindestens eine Öffnung 50, welche die erste Kammer 26 mit der zweiten Kammer 52 im zusätzlichen Kühlkörper 36 hydraulisch miteinander verbindet, nicht dargestellt. Über den in Figur 5 nicht dargestellten Kühlfluideintritt in die erste Kammer 26, die durch das Einsatzteil 28 und das Abdeckteil 30 gebildet ist, einströmendes Kühlfluid kühlt die mit Bezugszeichen 58 bezeichneten gekühlten Flächen des hülsenförmigen Fortsatzes des Abdeckteiles 30, welche sich parallel zum verjüngt ausgebildeten Schaft des Dosierventils 12 erstrecken. In das Innere des Abdeckteiles 30 ist die Zentrierung bzw. ein Stützteil 32 eingelassen, welches die sich in vertikale Richtung nach unten erstreckende Ventilspitze des Dosierventiles 12 im Abdeckteil 30 zentriert und abdichtet. Die Stirnseite des Dosierventiles 12 ragt durch eine Öffnung 56 des Einsatzteiles 28 sowie durch eine Öffnung 54, die sich im Topf 24 befindet, in den in Figur 5 nicht dargestellten Abgastrakt der Verbrennungskraftmaschine hinein, der von den sehr heißen Abgasen, NOₓ-Anteile enthaltend, der Verbrennungskraftmaschine durchströmt wird.

Von der ersten Kammer 26 aus strömt das nun aufgrund der Kühlung der gekühlten Fläche 58 erwärmte Kühlfluid über die in der Schnittdarstellung gemäß Figur 4 dargestellte mindestens eine Öffnung 50 in die zweite Kammer 52, die sich oberhalb der ersten Kammer 26 im zusätzlichen Kühlkörper 36 befindet, über. Dabei werden die dort mit Bezugszeichen 60 bezeichneten Flächen gekühlt, so dass sich im mittleren Bereich des Dosierventiles 10, insbesondere im Bereich des elektrischen Steckkontaktes 18, der von der Schutzkappe 62 umgeben ist, eine Kühlwirkung einstellt. Durch die erfindungsgemäß vorgeschlagene zweite Kammer 52, die sich im zusätzlichen Kühlkörper 36 befindet, kann eine Begrenzung der Temperaturen im Bereich des elektrischen Steckkontaktes 18 auf ein Temperaturniveau von 160°C erreicht werden. Dies bedeutet, dass aufgrund der durch die erfindungsgemäß vorgeschlagene Lösung sichergestellten Kühlung im mittleren Bereich des Dosierventiles 12 des Dosiermodules 10 Ausfallerscheinungen im Bereich des elektrischen Steckkontaktes 18 ausgeschlossen sind, da eine wirksamere Kühlung durch das Kühlfluid erreicht werden kann, verglichen beispielsweise mit einer Luftspaltisolierung.

Figur 5 zeigt, dass der zusätzliche Kühlkörper 36 mit seiner Bodenfläche 64 plan auf der Planfläche 46 der Deckfläche 34 des Abdeckteiles 30 aufsitzt, wodurch ein guter Wärmeübergang zwischen diesen beiden Komponenten, d.h. im zusätzlichen Kühlkörper 36 und dem Abdeckteil 30 gewährleistet ist. Besagte Teile, d.h. der zusätzliche Kühlkörper 36 sowie das Abdeckteil 30 können fertigungstechnisch besonders einfach als Tiefziehteile gefertigt werden. Die stoffschlüssige Verbindung, welche die besagten Bauteile, d.h. den zusätzlichen Kühlkörper 36 mit dem Abdeckteil 30 verbindet, wird entlang der Kontaktfläche 38 in Umfangsrichtung zwischen diesen Komponenten bevorzugt als Umfangslaserschweißnaht ausgeführt. Dieses Verfahren hat sich im Großserienmaßstab als besonders kostengünstig und effizient erwiesen.

Durch die erfindungsgemäß vorgeschlagene Lösung kann eine Komplettkühlung des Dosiermoduls 10 erreicht werden. In besonders vorteilhafter Weise lässt sich der Bereich, der den höchsten thermischen Belastungen ausgesetzt ist, durch Befüllung der ersten Kammer 26 mit Kühlfluid, welches eine relativ niedrige Temperatur aufweist, realisieren. Über den zusätzlichen Kühlkörper 36, welcher die zweite Kühlkammer 52 enthält, kann der elektrische Kontaktierungsbereich 18 gekühlt werden, so dass dessen zuverlässige Funktion auch bei höherem Umgebungstemperaturniveau gewährleistet ist. Dies wiederum ermöglicht es, die erfindungsgemäß vorgeschlagene Dosiervorrichtung 10 nicht nur im Unterbaubereich des Fahrzeugs, d.h. in unmittelbarer Nähe zur Abgasanlage anzuordnen, sondern diese auch je nach Designerfordernissen und OEM-Anforderungen im Motorraum eines Fahrzeugs zu verlegen. Durch die vollständige Kühlung der Dosiervorrichtung 10, insbesondere durch die zweite Kammer 52 des zusätzlichen Kühlkörpers 36 im Mittelbereich des Dosierventiles 12, kann die elektrische Kontaktierung 18 temperiert werden, so dass ein Ausfall der elektrischen Kontaktierung ausgeschlossen ist.

## Patentansprüche

1. Dosiervorrichtung (10) mit einem Dosierventil (12) und einer Kühlvorrichtung, die von einem Kühlfluid durchströmt ist und die mindestens eine erste Kammer (26) umfasst, die einen Kühlfluid-Eintritt (42) aufweist, **dadurch gekennzeichnet, dass** das Dosierventil (12) über einen zusätzlichen Kühlkörper (36) verfügt, der eine zweite Kammer (52) umfasst, die über mindestens eine Öffnung (50) hydraulisch mit der ersten Kammer (26) verbunden ist, wobei die erste Kammer (26) zur Aufnahme des Kühlfluides durch ein Einsatzteil (28) und ein Abdeckteil (30) begrenzt ist, und wobei sich in dem Abdeckteil (30), insbesondere in dessen Deckfläche (34) mindestens ein Kühlfluid-Eintritt (42) befindet, wobei der mindestens eine Kühlfluid-Eintritt (42) im Wesentlichen axial angebracht ist.

2. Dosiervorrichtung (10) gemäß dem vorhergehenden Anspruch, **dadurch gekennzeichnet, dass** das Kühlfluid von der ersten Kammer (26) in die zweite Kammer (52) in Überströmrichtung (48) überströmt.

3. Dosiervorrichtung (10) gemäß einem der vorhergehenden Ansprüche, **dadurch gekennzeichnet, dass** der zusätzliche Kühlkörper (36) einen Mittelbereich des Dosierventiles (12), insbesondere eine elektrische Kontaktierung (18) umschließt.

4. Dosiervorrichtung (10) gemäß einem der vorhergehenden Ansprüche, **dadurch gekennzeichnet, dass** der zusätzliche Kühlkörper (36) mit dem Abdeckteil (30) verbunden ist.

5. Dosiervorrichtung (10) gemäß dem vorhergehenden Anspruch, **dadurch gekennzeichnet, dass** eine stoffschlüssige Verbindung (38) zwischen dem zusätzlichen Kühlkörper (26) und einer Planfläche (46) des Einsatzteiles (30) ausgebildet ist.

6. Dosiervorrichtung (10) gemäß dem vorhergehenden Anspruch, **dadurch gekennzeichnet, dass** die stoffschlüssige Verbindung als Laserschweißverbindung ausgebildet ist.

7. Dosiervorrichtung (10) gemäß Anspruch 5, **dadurch gekennzeichnet, dass** die stoffschlüssige Verbindung als Hartlötverbindung oder als Lötverbindung ausgebildet ist.

8. Dosiervorrichtung (10) gemäß einem der vorhergehenden Ansprüche, **dadurch gekennzeichnet, dass** sich der zusätzliche Kühlkörper (36) mit einem Sockel plan auf einer als Planfläche (46) ausgebildeten Deckfläche (34) des Abdeckteiles (30) abstützt.

9. Dosiervorrichtung (10) gemäß einem der vorhergehenden Ansprüche, **dadurch gekennzeichnet, dass** das Dosierventil (12) im Abdeckteil (30) durch eine Zentrierung bzw. ein Stützteil (32) abgestützt ist.

10. Dosiervorrichtung (10) gemäß einem der vorhergehenden Ansprüche, **dadurch gekennzeichnet, dass** in Nachbarschaft zum Kühlfluid-Eintritt (42) am zusätzlichen Kühlkörper (36) eine Einbuchtung (44) zur Vereinfachung der Montage ausgebildet ist.

11. Dosiervorrichtung (10) gemäß einem der vorhergehenden Ansprüche, **dadurch gekennzeichnet, dass** sich mindestens eine die erste Kammer (26) und die zweite Kammer (52) hydraulisch miteinander verbindende Öffnung (50) durch ein Bodenteil (64) des zusätzlichen Kühlkörpers (36) und durch ein Deckelteil (66) der Abdeckteile (30) erstreckt.

12. Verwendung der Dosiervorrichtung (10) gemäß einem der vorhergehenden Ansprüche bei Anwendungen in Personenkraftfahrzeugen (Pkw) und bei Lastkraftwagen (Lkw).

## Claims

1. Metering device (10) having a metering valve (12) and a cooling device which is flowed through by a cooling fluid and comprises at least one first chamber (26) which has a cooling fluid inlet (42), **characterized in that** the metering valve (12) has an additional cooling element (36) which comprises a second chamber (52) and is connected hydraulically to the first chamber (26) via at least one opening (50), wherein for receiving the cooling fluid, the first chamber (26) is delimited by an insert part (28) and a covering part (30), and wherein at least one cooling fluid inlet (42) is situated in the covering part (30), in particular in its cover face (34), wherein the at least one cooling fluid inlet (42) is made substantially axially.

2. Metering device (10) according to the preceding claim, **characterized in that** the cooling fluid flows over from the first chamber (26) into the second chamber (52) in the crossflow direction (48).

3. Metering device (10) according to either of the preceding claims, **characterized in that** the additional cooling body (36) encloses a center region of the metering valve (12), in particular an electrical contact (18).

4. Metering device (10) according to one of the preceding claims, **characterized in that** the additional cooling element (36) is connected to the covering part (30).

5. Metering device (10) according to the preceding claim, **characterized in that** a material-to-material connection (38) is formed between the additional cooling element (26) and a planar face (46) of the insert part (30).

6. Metering device (10) according to the preceding claim, **characterized in that** the material-to-material connection is configured as a laser welded connection.

7. Metering device (10) according to Claim 5, **characterized in that** the material-to-material connection is configured as a brazed connection or as a soldered connection.

8. Metering device (10) according to one of the preceding claims, **characterized in that** the additional cooling element (36) is supported in a planar manner by way of a base on a cover face (34) of the covering part (30), which cover face (34) is configured as a planar face (46).

9. Metering device (10) according to one of the preceding claims, **characterized in that** the metering valve (12) is supported in the covering part (30) by a centering means or a supporting part (32).

10. Metering device (10) according to one of the preceding claims, **characterized in that** an indentation (44) for simplifying assembly is formed on the additional cooling element (36) in the vicinity of the cooling fluid inlet (42).

11. Metering device (10) according to one of the preceding claims, **characterized in that** at least one opening (50) which connects the first chamber (26) and the second chamber (52) to one another hydraulically extends through a bottom part (64) of the additional cooling element (36) and through a lid part (66) of the covering parts (30).

12. Use of the metering device (10) according to one of the preceding claims in applications in passenger motor vehicles and in trucks.

## Revendications

1. Dispositif de dosage (10) avec une soupape de dosage (12) et un dispositif de refroidissement, qui est parcouru par un fluide de refroidissement et qui comprend au moins une première chambre (26), qui présente une entrée de fluide de refroidissement (42), **caractérisé en ce que** la soupape de dosage (12) comporte un corps de refroidissement supplémentaire (36), qui comprend une deuxième chambre (52) qui est en liaison hydraulique avec la première chambre (26) par au moins une ouverture (50), dans lequel la première chambre (26) destinée à contenir le fluide de refroidissement est limitée par une partie d'insert (28) et une partie de recouvrement (30), et dans lequel au moins une entrée de fluide de refroidissement (42) se trouve dans la partie de recouvrement (30), en particulier dans sa face de couverture (34), dans lequel ladite au moins une entrée de fluide de refroidissement (42) est placée de façon essentiellement axiale.

2. Dispositif de dosage (10) selon la revendication précédente, **caractérisé en ce que** le fluide de refroidissement déborde de la première chambre (26) dans la deuxième chambre (52) dans la direction de débordement (48).

3. Dispositif de dosage (10) selon l'une quelconque des revendications précédentes, **caractérisé en ce que** le corps de refroidissement supplémentaire (36) entoure une région moyenne de la soupape de dosage (12), en particulier un contact électrique (18).

4. Dispositif de dosage (10) selon l'une quelconque des revendications précédentes, **caractérisé en ce que** le corps de refroidissement supplémentaire (36) est assemblé à la partie de recouvrement (30).

5. Dispositif de dosage (10) selon la revendication précédente, **caractérisé en ce qu'**une liaison matérielle (38) est formée entre le corps de refroidissement supplémentaire (26) et une face plane (46) de la partie d'insert (30).

6. Dispositif de dosage (10) selon la revendication précédente, **caractérisé en ce que** la liaison matérielle est réalisée sous forme d'assemblage soudé au laser.

7. Dispositif de dosage (10) selon la revendication 5, **caractérisé en ce que** la liaison matérielle est réalisée sous forme d'assemblage par brasage fort ou d'assemblage par brasage.

8. Dispositif de dosage (10) selon l'une quelconque des revendications précédentes, **caractérisé en ce que** le corps de refroidissement supplémentaire (36) s'appuie à plat avec un socle sur une face de couverture (34) de la partie de recouvrement (30) formée par une face plane (46).

9. Dispositif de dosage (10) selon l'une quelconque des revendications précédentes, **caractérisé en ce que** la soupape de dosage (12) est appuyée dans la partie de recouvrement (30) par un centrage ou par une partie d'appui (32).

10. Dispositif de dosage (10) selon l'une quelconque des revendications précédentes, **caractérisé en ce qu'**un enfoncement (44) est formé à proximité de l'entrée de fluide de refroidissement (42) sur le corps de refroidissement supplémentaire (36) afin de simplifier le montage.

11. Dispositif de dosage (10) selon l'une quelconque des revendications précédentes, **caractérisé en ce qu'**au moins une ouverture (50) reliant hydrauliquement l'une à l'autre la première chambre (26) et la deuxième chambre (52) s'étend à travers une partie de fond (64) du corps de refroidissement supplémentaire (36) et à travers une partie de couvercle (66) des parties de recouvrement (30).

12. Utilisation du dispositif de dosage (10) selon l'une quelconque des revendications précédentes pour des applications dans des voitures automobiles PKW) et dans des camions (LKW).
